# EUROPÄISCHE PATENTSCHRIFT

(11) **EP 3 483 459 B1**
(45) Veröffentlichungstag und Bekanntmachung des Hinweises auf die Patenterteilung: **03.06.2020**
(21) Anmeldenummer: 18199411.2
(22) Anmeldetag: 09.10.2018
(51) Int. Cl.: F16B 2/12

(54) **TRÄGERKLAMMER**
GIRDER CLAMP
PINCE DE SUPPORT

(30) Priorität: 13.11.2017 DE 102017126656
(43) Veröffentlichungstag der Anmeldung: 15.05.2019
(73) Patentinhaber: Sikla Holding GmbH, 4614 Marchtrenk (AT)
(72) Erfinder: Menz, Peter, 78628 Rottweil (DE); Braack, Ellen, 78549 Spaichingen (DE)
(74) Vertreter: Mertzlufft-Paufler, Cornelius

(56) Entgegenhaltungen:
- EP-A2- 0 221 006
- WO-A1-2004/051095
- FR-A- 1 465 282
- US-A- 4 379 651
- US-A- 5 769 292

## Beschreibung

Die Erfindung betrifft eine Trägerklammer mit zwei formidentisch ausgebildeten Klammerelementen, die an gegenüberliegenden Seiten Kontaktflächen tragen, welche ein Klammermaul begrenzen, wobei die Klammerelemente jeweils ein Mittelteil sowie beidseits des Mittelteils ein erstes beziehungsweise ein zweites Flügelteil haben und die derart U-förmig geformt sind, dass das Mittelteil den Mittelsteg der U-Form und die Flügelteile jeweils einen freien Steg der U-Form bilden, wobei an einem dem Mittelteil abgewandten Querrand zumindest eines Flügelteiles eines jeden Klammerelementes eine der Kontaktflächen vorgesehen ist und wobei die Klammerelemente mit ihren Flügelteilen zwischen einer Relativposition geringsten Abstands und einer Relativposition größten Abstands der auf gegenüberliegenden Seiten angeordneten Kontaktflächen aneinander verschieblich geführt sind.

Man hat bereits verschiedene Trägerklammern geschaffen, die beispielsweise zum Befestigen einer Rohrschelle, einer Montageschiene oder dergleichen Befestigungselements an einem Flansch eines T-Trägers oder eines Doppel-T-Trägers dienen.

So ist aus der WO 2004/051095 A1 eine Trägerklammer der eingangs erwähnten Art vorbekannt, die zwei formidentisch ausgebildete Klammerelemente hat, welche als Biegeformteile aus jeweils einem Materialzuschnitt hergestellt sind. Die Klammerelemente der vorbekannten Trägerklammer weisen an gegenüberliegenden Seiten Kontaktflächen auf, die ein Klammermaul begrenzen. Die vorbekannte Trägerklammer kann mit ihrem Klammermaul an dem Flansch eines T-Trägers angreifen, wobei die das Klammermaul begrenzenden und auf gegenüberliegenden Seiten vorgesehenen Kontaktflächen den Randbereich des Flansches zwischen sich einspannen. Die als Biegeformteile ausgestalteten Klammerelemente, die jeweils ein Mittelteil und beidseits des Mittelteiles ein erstes beziehungsweise ein zweites Flügelteil haben, sind derart U-förmig geformt, dass das Mittelteil den Mittelsteg der U-Form und die Flügelteile einen freien Steg der U-Form bilden. Dabei ist jeweils an einem dem Mittelteil abgewandten Querrand der Flügelteile eine der Kontaktflächen vorgesehen. Um die Trägerklammer an dem Flansch des T-Trägers zu befestigen, sind die Klammerelemente der Trägerklammer mit ihren Flügelteilen zwischen einer Relativposition geringsten Abstands und einer Relativposition größten Abstands der auf gegenüberliegenden Seiten angeordneten Kontaktflächen aneinander verschieblich geführt. Damit die Klammerelemente ineinander verschoben werden können, weist das eine Klammerelement im Bereich seiner Flügelteile einen reduzierten Klammerquerschnitt auf, der zwischen die Flügelteile des anderen Klammerelements der Trägerklammer passt. Ungeachtet dessen ist in den Figuren 5(a) und 5(b) sowie auf Seite 13, Zeilen 4 bis 6 der WO 2004/051095 A1 dargestellt, dass die aneinander verschieblich geführten Klammerelemente der vorbekannten Trägerklammer auch formidentisch ausgebildet sein können. Die Herstellung der vorbekannten Trägerklammer mit ihren beiden Kammerelementen ist jedoch vergleichsweise aufwendig.

Es besteht daher insbesondere die Aufgabe, eine Trägerklammer der eingangs erwähnten Art zu schaffen, die bei der Herstellung ihrer Klammerelemente einen demgegenüber reduzierten Aufwand erfordert.

Die erfindungsgemäße Lösung dieser Aufgabe besteht bei der Trägerklammer der eingangs erwähnten Art insbesondere darin, dass an dem ersten Flügelteil eines jeden Klammerelements ein dem Klammermaul abgewandter Längsrand zum benachbarten zweiten Flügelteil dieses Klammerelements hin abgewinkelt ist und dass ein dem Klammermaul abgewandter Längsrand am zweiten Flügelteil dieses Klammerelements derart umgebogen ist, dass jeweils der umgebogene Längsrand am zweiten Flügelteil des einen Klammerelements den abgewinkelten Längsrand am ersten Flügelteil des anderen Klammerelements hintergreift.

Die erfindungsgemäße Trägerklammer weist zwei formidentisch ausgebildete Klammerelemente auf, die an gegenüberliegenden Seiten Kontaktflächen tragen, welche ein Klammermaul begrenzen. Mithilfe des Klammermauls kann die erfindungsgemäße Trägerklammer beispielsweise an einem Flansch eines T-Trägers oder eines Doppel-T-Trägers befestigt werden, wobei die auf den gegenüberliegenden Seiten der Klammerelemente angeordneten Kontaktflächen den Flansch zwischen sich einspannen. Jedes der Klammerelemente weist ein Mittelteil sowie beidseits des Mittelteiles ein erstes beziehungsweise ein zweites Flügelteil auf. Dabei sind die Klammerelemente derart U-förmig geformt, dass das Mittelteil den Mittelsteg der U-Form und die Flügelteile jeweils einen freien Steg der U-Form bilden. An einem dem Mittelteil abgewandten Querrand zumindest eines Flügelteiles und vorzugsweise beider Flügelteile eines jeden Klammerelements ist eine der das Klammermaul begrenzenden Kontaktflächen vorgesehen.

Zum Festspannen des Flansches eines T-Trägers in dem Klammermaul der erfindungsgemäßen Trägerklammer sind die Klammerelemente mit ihren Flügelteilen zwischen einer Relativposition geringsten Abstands und einer Relativposition größten Abstands der auf gegenüberliegenden Seiten angeordneten Kontaktflächen aneinander verschieblich geführt.

Da die erfindungsgemäße Trägerklammer aus formidentischen Klammerelementen zusammengestellt ist, wird der mit der Herstellung unterschiedlich ausgestalteter Klammerelemente verbundene Mehraufwand vermieden. Da jeweils zwei formidentische Klammerelemente zu einer erfindungsgemäßen Trägerklammer zusammengesetzt werden können, ohne dass dabei darauf geachtet werden muss, dass diese Klammerelemente unterschiedliche, aber zueinander passende Formgebungen haben, wird die Montage der erfindungsgemäßen Trägerklammer wesentlich erleichtert.

Damit die formidentischen Klammerelemente der erfindungsgemäßen Trägerklammer einen Flansch zwischen sich einspannen können, sind diese Klammerelemente in Schieberichtung verschieblich, aber ansonsten unverrückbar aneinander zu führen. Dazu ist erfindungsgemäß vorgesehen, dass an dem ersten Flügelteil eines jeden Klammerelementes ein dem Klammermaul abgewandter Längsrand zum benachbarten zweiten Flügelteil dieses Klammerelementes hin abgewinkelt ist und dass ein dem Klammermaul abgewandter Längsrand am zweiten Flügelteil dieses Klammerelementes derart umgebogen ist, das jeweils der umgebogene Längsrand am zweiten Flügelteil des einen Klammerelementes den abgewinkelten Längsrand am ersten Flügelteil des anderen Klammerelementes hintergreift.

Damit die formidentischen Klammerelemente mit ihren über das Mittelteil vorstehenden Flügelteilen gut aneinander geführt werden können, ist es vorteilhaft, wenn die zweiten Flügelteile der Klammerelemente mit ihrer Innenseite an der Außenseite des ersten Flügelteiles des jeweils anderen Klammerelementes anliegen.

Damit eine den Flansch eines T-Trägers in seinem Klammermaul einspannende Trägerklammer nicht unbeabsichtigt von dem Flansch abgezogen werden kann, ist es vorteilhaft, wenn an der Kontaktfläche zumindest eines der Flügelteile eines jeden Klammerelementes eine Halteprofilierung, insbesondere eine Haltezahnung, vorgesehen ist.

Damit die Klammerelemente des erfindungsgemäßen Trägerelements von einer Relativposition der Klammerelemente aus in eine Relativposition dieser Klammerelemente mit geringerem Abstand der Kontaktflächen verschoben und in dieser Relativposition fixiert werden können, kann an zumindest einem Paar der paarweise aneinander anliegenden Flügelteile der Klammerelemente eine Rastzahnung oder dergleichen Schiebesperre vorgesehen sein. Bevorzugt wird jedoch eine Ausführungsform der Erfindung, bei der am Mittelteil eines jeden Klammerelementes zumindest eine Durchstecköffnung vorgesehen ist, wobei durch einander paarweise zugeordnete Durchstecköffnungen an dem einen und dem anderen Klammerelement ein Gewindeschaft oder ein Gewindestab durchführbar ist, welcher Gewindeschaft oder welcher Gewindestab zum Festlegen der Relativposition der Klammerelemente der Trägerklammer bestimmt ist. Werden die Klammerelemente mittels dem Gewindeschaft oder dem Gewindestab in einer am Flansch eines T-Trägers eingespannten Position gehalten, lässt sich diese Verbindung der Klammerelemente mittels dem Gewindeschaft oder dem Gewindestab bei Bedarf lösen, wenn die Trägerklammer vom Flansch abgezogen werden soll.

Eine besonders vorteilhafte Weiterbildung gemäß der Erfindung sieht vor, dass an dem ersten oder dem zweiten Flügelteil eines jeden Klammerelementes in einem dem Mittelteil abgewandten Teilbereich dieses Flügelteiles wenigstens ein Führungsvorsprung vorsteht, welcher Führungsvorsprung in Gebrauchsstellung der Trägerklammer in eine Führungsausformung am zweiten Flügelteil des jeweils anderen Klammerelementes verschieblich eingreift. Dabei bilden der Führungsvorsprung und die mit dem Führungsvorsprung zusammenwirkende in Schieberichtung langgezogene Führungsausformung eine Kulissenführung, in welcher die Klammerelemente an ihren aneinander anliegenden Flügelteilen fest miteinander verbunden, aber in Schieberichtung verschieblich aneinander geführt sind.

Dabei sieht eine bevorzugte Ausführungsform gemäß der Erfindung vor, dass der Führungsvorsprung etwa nockenförmig ausgebildet ist. Ein solcher, etwa nockenförmig ausgebildeter Führungsvorsprung erleichtert das Aufspreizen der Flügelteile der miteinander zur erfindungsgemäßen Trägerklammer zu verbindenden Klammerelemente, wenn dieser Führungsvorsprung in die Führungsausformung eingeschoben werden soll.

Ein unbeabsichtigtes Lösen der aneinander verschieblich geführten Klammerelemente der erfindungsgemäßen Trägerklammer wird vermieden, wenn der Schiebeweg der Führungsvorsprünge in den Führungsausformungen den maximalen Abstand der gegenüberliegenden Kontaktflächen begrenzen.

Eine mit besonders geringem Aufwand herstellbare Ausführungsform gemäß der Erfindung sieht vor, dass die Klammerelemente der Trägerklammer als formidentische Biegeformteile ausgestaltet und aus einem Materialzuschnitt hergestellt sind, der das Mittelteil sowie die beidseits des Mittelteils angeordneten Flügelteile aufweist.

Eine bevorzugte Ausführungsform gemäß der Erfindung sieht vor, dass zum Festspannen des Klammermauls der Trägerklammer zumindest eine Gewindemutter auf dem wenigstens einen Gewindeschaft oder der mindestens einen Gewindestange vorgesehen ist, welche Gewindemutter den die Durchstecköffnung umgrenzenden Randbereich am Mittelteil des benachbarten Klammerelements beaufschlagt.

Dabei wird ein Ausführungsbeispiel bevorzugt, bei dem an dem wenigstens einen Gewindestab oder dem mindestens einen Gewindestab eine Rohrschelle, eine Montageschiene oder dergleichen Befestigungselement gehalten ist.

Weiterbildungen gemäß der Erfindung ergeben sich aus der nachfolgenden Beschreibung eines bevorzugten Ausführungsbeispiels in Verbindung mit den Ansprüchen sowie der Zeichnung. Nachstehend wird die Erfindung anhand eines bevorzugten Ausführungsbeispiels noch näher beschrieben.

Es zeigt:
- Fig. 1: eine aus formidentischen Klammerelementen zusammengestellte Trägerklammer, die mit einem Klammermaul an dem Flansch eines Doppel-T-Trägers randseitig angreift,
- Fig. 2: die Trägerklammer aus Figur 1 in einer perspektivischen Seitenansicht,
- Fig. 3: die Trägerklammer aus Figur 1 und 2 in einer perspektivischen Seitenansicht mit Blick auf die andere Seitenfläche der Trägerklammer,
- Fig. 4: die Trägerklammer aus den Figuren 1 bis 3 in einer Draufsicht,
- Fig. 5: die Trägerklammer aus den Figuren 1 bis 4 in einer Seitenansicht,

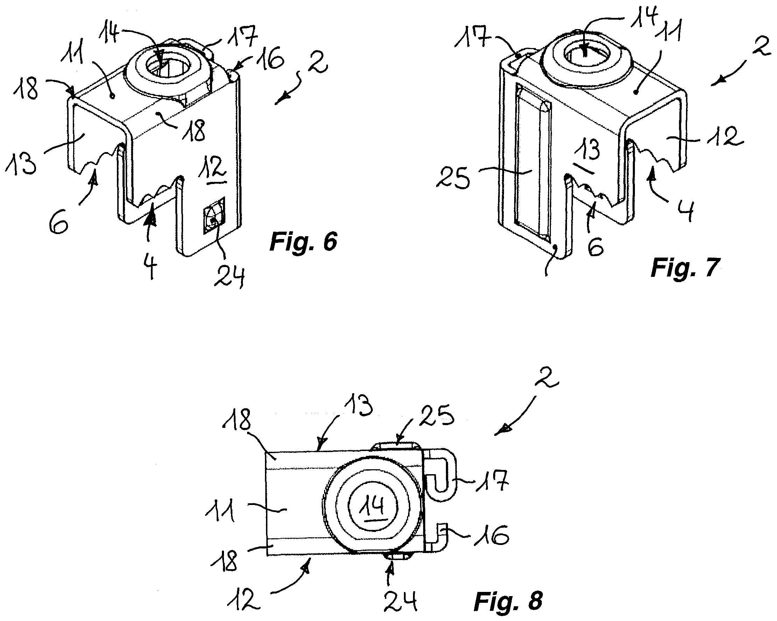

- Fig. 6: der für die Trägerklammer gemäß den Figuren 1 bis 5 verwendeten Klammerelemente in einer perspektivischen Seitenansicht,
- Fig. 7: das Klammerelement aus Figur 6 in einer perspektivischen Seitenansicht mit Blick auf die gegenüberliegende Flachseite des Klammerelements und
- Fig. 8: das Klammerelement aus den Figuren 6 und 7 in einer Draufsicht.

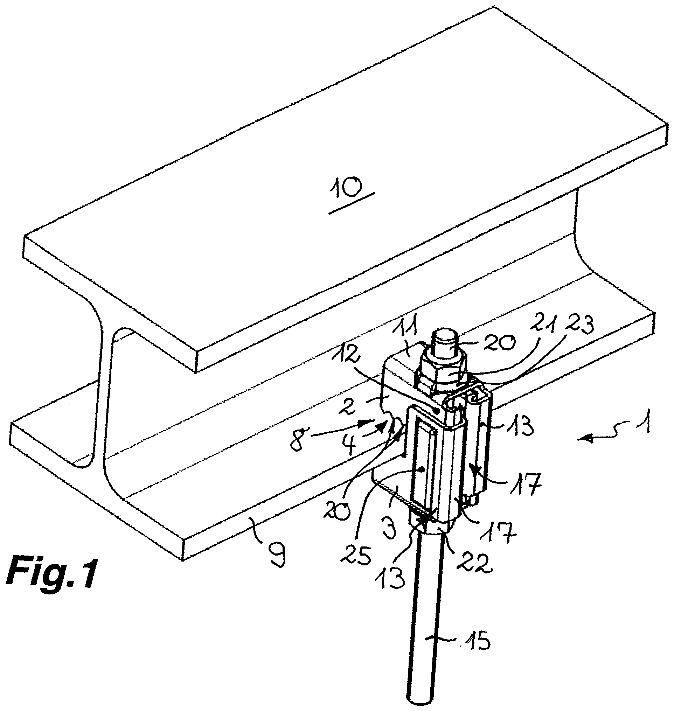

Die hier dargestellte Trägerklammer 1 weist zwei Klammerelemente 2, 3 auf, die auf gegenüberliegenden Seiten Kontaktflächen 4, 5 beziehungsweise 6, 7 tragen, welche ein Klammermaul 8 begrenzen. Mithilfe des Klammermauls 8 kann die Trägerklammer 1 beispielsweise an einem Flansch 9 eines T-Trägers oder eines in Figur 1 gezeigten Doppel-T-Trägers 10 befestigt werden, wobei die auf gegenüberliegenden Seiten der Klammerelemente 2, 3 angeordneten Kontaktflächen 4, 5, 6, 7 den Flansch 9 zwischen sich einspannen. Jedes der Klammerelemente 2, 3 weist ein Mittelteil 11 sowie beidseits des Mittelteils 11 ein erstes beziehungsweise ein zweites Flügelteil 12, 13 auf. Dabei sind die Klammerelemente 2, 3 derart U-förmig geformt, dass das Mittelteil 11 den Mittelsteg der U-Form und die Flügelteile 12, 13 jeweils einen freien Steg der U-Form bilden. An einem dem Mittelteil 11 abgewandten Querrand zumindest eines Flügelteiles 12, 13 und vorzugsweise beider Flügelteile 12, 13 eines jeden Klammerelements 2, 3 ist eine der das Klammermaul 8 begrenzenden Kontaktflächen 4, 5, 6, 7 vorgesehen. Zum Festspannen des Flansches 9 ist am Mittelteil 11 eines jeden Klammerelements 2, 3 zumindest eine Durchstecköffnung 14 vorgesehen. Durch die einander paarweise zugeordneten Durchstecköffnungen 14 an dem einen und dem anderen Klammerelement 2, 3 ist hier ein Gewindestab 15 durchführbar, der zum Festlegen der Relativposition der Klammerelemente 2, 3 der Trägerklammer 1 bestimmt ist.

Die Klammerelemente 2, 3 der Trägerklammer 1 sind formidentisch ausgebildet. Da die Trägerklammer 1 aus formidentischen Klammerelementen 2, 3 hergestellt ist, wird der mit der Herstellung unterschiedlich ausgestalteter Klammerelemente verbundene Mehraufwand vermieden. Da jeweils zwei formidentische Klammerelemente 2, 3 zu einer erfindungsgemäßen Trägerklammer 1 zusammengesetzt werden können, ohne dass dabei darauf geachtet werden muss, dass diese Klammerelemente 2, 3 unterschiedliche, aber zueinander passende Formgebungen haben, wird die Montage der erfindungsgemäßen Trägerklammer 1 noch zusätzlich wesentlich erleichtert.

Damit die formidentischen Klammerelemente 2, 3 den Flansch 9 des Doppel-T-Trägers 10 zwischen sich einspannen können, sind diese Klammerelemente 2, 3 in Schieberichtung Pf 1 verschieblich, aber ansonsten unverrückbar aneinander geführt. Dazu sind an dem ersten Flügelteil 12 eines jeden Klammerelements 2, 3 ein dem Klammermaul 8 abgewandter Längsrand 16 zum benachbarten zweiten Flügelteil 13 dieses Klammerelementes 2, 3 hin abgewinkelt, während ein dem Klammermaul 8 abgewandter Längsrand 17 am zweiten Flügelteil 13 dieses Klammerelements 2, 3 derart umgebogen ist, dass jeweils der umgebogene Längsrand 17 am zweiten Flügelteil 13 des einen Klammerelements 2, 3 den abgewinkelten Längsrand 16 am ersten Flügelteil 12 des anderen Klammerelements 3, 2 hintergreift. Auf diese Weise sind die beiden Klammerelemente 2, 3 an den dem Klammermaul 8 abgewandten Längsrändern 16, 17 ihrer Flügelteile 12, 13 in komplementären Längsrandausgestaltungen belastbar und dennoch in Längsrichtung Pf 1 veschieblich aneinander geführt.

Die Klammerelemente 2, 3 der Trägerklammer 1 sind hier als Biegeformteile jeweils aus einem Materialzuschnitt und insbesondere aus einem Metallblechzuschnitt hergestellt. Dieser Materialzuschnitt weist das Mittelteil 11 auf, das an gegenüberliegenden Seiten entlang einer Biegekante 18 mit jeweils einem der Flügelteile 12, 13 verbunden ist. Die Flügelteile 12, 13 sind hier in Seitenansicht etwa L-förmig ausgebildet, wobei der Quersteg dieser L-Form an der Biegekante 18 mit dem Mittelteil 11 verbunden ist und der dem Mittelteil 11 abgewandte Querrand des Querstegs dieser L-Form die Kontaktflächen 4, 5, 6, 7 des betreffenden Flügelteiles 12, 13 der Klammerelemente 2, 3 bildet. An den Längsstegen der L-Form der Flügelteile 12, 13 sind die dem Klammermaul 8 abgewandten Längsränder 16, 17 der Klammerelemente 2, 3 ausgebildet.

In einem den Längsstegen der L-förmigen Flügelteile 12, 13 angenäherten Teilbereich der Mittelteile 11 der Klammerelemente 2, 3 ist jeweils eine der Durchstecköffnungen 14 vorgesehen. Dabei fluchten die an den Mittelteilen der Klammerelemente 2, 3 vorgesehenen Durchstecköffnungen 14 derart miteinander, dass der Gewindestab 15 die einander zugeordneten Durchstecköffnungen 14 durchsetzt. Auf den Gewindestab 15 sind mindestens zwei Gewindemuttern 21, 22 aufgeschraubt, welche die Klammerelemente 2, 3 an einander abgewandten Außenseiten, gegebenenfalls unter Vermittlung wenigstens einer Unterlegscheibe 23, beaufschlagen und zwischen sich einspannen. Dabei kann der eine der Durchstecköffnungen 19 umgrenzende Randbereich der Mittelteile 11 nach außen vorzugsweise nockenförmig ausgewölbt sein, wodurch die Kraft der Gewindemuttern 21, 22 besser auf das benachbarte Klammerelement 2, 3 übertragen und das Mittelteil 11 in diesem Bereich zusätzlich ausgesteift wird.

Damit die formidentischen Klammerelemente 2, 3 mit ihren über das Mittelteil 11 vorstehenden Flügelteilen 12, 13 gut aneinander geführt werden können, ist es vorteilhaft, wenn an dem ersten oder dem zweiten Flügelteil 12, 13 eines jeden Klammerelements 2, 3 in einem dem Mittelteil 11 abgewandten Teilbereich dieses Flügelteiles 12 oder 13 wenigstens ein vorzugsweise nockenförmiger Führungsvorsprung 24 vorsteht, welcher Führungsvorsprung 24 in eine in Schieberichtung Pf 1 langgezogene Führungsausformung 25 am zweiten oder ersten Flügelteil 13, 12 des jeweils anderen Klammerelementes 3, 2 verschieblich eingreift. Dabei ermöglicht der Führungsvorsprung 24 aufgrund der Reibkraft gegenüber der Führungsausformung 25 eine leichte Klemmung oder Vorfixierung der Trägerklammer 1 am T-Träger 10 und dessen Flansch 9, ohne dass eine Klemmkraft mittels der Gewindemuttern 21, 22 aufgebracht werden müsste. Hierdurch wird die Montage der Trägerklammer 1 wesentlich erleichtert.

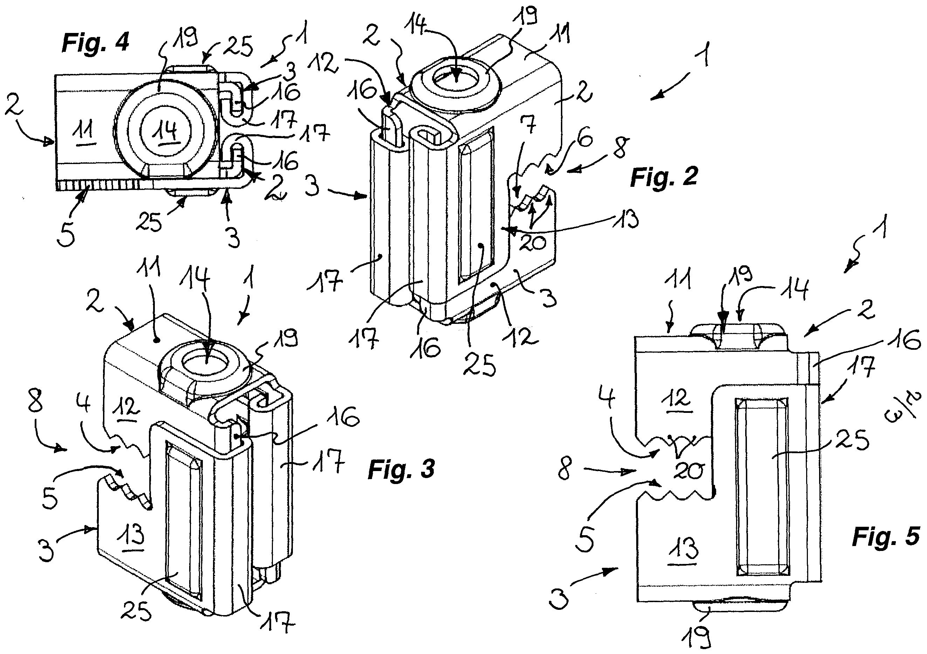

Dabei begrenzt der Schiebeweg der Führungsvorsprünge 24 in den Führungsausformungen 25 den maximalen Abstand der gegenüberliegenden Kontaktflächen 4, 5, 6, 7. Aus einem Vergleich der Figuren 2 bis 4 wird deutlich, dass die zweiten Flügelteile 13 der Klammerelemente 2, 3 mit ihrer Innenseite an der Außenseite des ersten Flügelteiles 12 des jeweils anderen Klammerelementes 3, 2 anliegen. Aus Figur 1 ist erkennbar, dass an dem Gewindestab 15 eine hier nicht weiter gezeigte Rohrschelle, eine Montageschiene oder dergleichen Befestigungselement gehalten sein kann, um dieses Befestigungselement am Flansch des Doppel-T-Trägers 10 beispielsweise nach unten abzuhängen. Da die Trägerklammer 1 aus formidentischen Klammerelementen 2, 3 hergestellt ist, wird der mit der Herstellung unterschiedlich ausgestalteter Klammerelemente verbundene Mehraufwand vermieden. Da jeweils zwei formidentische Klammerelemente 2, 3 zu der hier gezeigten Trägerklammer 1 zusammengesetzt werden können, ohne dass dabei darauf geachtet werden muss, dass diese Klammerelemente 2, 3 unterschiedliche, aber zueinander passende Formgebungen haben, wird die Montage der hier gezeigten Trägerklammer 1 wesentlich erleichtert.

### Bezugszeichenliste

- 1: Trägerklammer
- 2: Klammerelement
- 3: Klammerelement
- 4: Kontaktfläche
- 5: Kontaktfläche
- 6: Kontaktfläche
- 7: Kontaktfläche
- 8: Klammermaul
- 9: Flansch
- 10: Doppel-T-Träger
- 11: Mittelteil
- 12: erstes Flügelteil
- 13: zweites Flügelteil
- 14: Durchstecköffnung
- 15: Gewindestab
- 16: abgewinkelter Längsrand des Flügelteils 12
- 17: umgebogener Längsrand des Flügelteils 13
- 18: Biegekannte
- 20: Haltezahnung
- 21: Gewindemutter
- 22: Gewindemutter
- 23: Unterlegscheibe
- 24: Führungsvorsprung
- 25: Führungsausformung

## Patentansprüche

1. Trägerklammer (1) mit zwei formidentisch ausgebildeten Klammerelementen (2, 3), die an gegenüberliegenden Seiten Kontaktflächen (4, 5; 6, 7) tragen, welche ein Klammermaul (8) begrenzen, wobei die Klammerelemente (2, 3) jeweils ein Mittelteil (11) sowie beidseits des Mittelteils (11) ein erstes beziehungsweise ein zweites Flügelteil (12, 13) haben und die derart U-förmig geformt sind, dass das Mittelteil (11) den Mittelsteg der U-Form und die Flügelteile (12, 13) jeweils einen freien Steg der U-Form bilden, wobei an einem dem Mittelteil (11) abgewandten Querrand zumindest eines Flügelteiles (12, 13) eines jeden Klammerelements (2, 3) eine der Kontaktflächen (4, 5, 6, 7) vorgesehen ist und wobei die Klammerelemente (2, 3,) mit ihren Flügelteilen (12, 13) zwischen einer Relativposition geringsten Abstands und einer Relativposition größten Abstands der auf gegenüberliegenden Seiten angeordneten Kontaktflächen (4, 5; 6, 7) aneinander verschieblich geführt sind, **dadurch gekennzeichnet, dass** an dem ersten Flügelteil (12) eines jeden Klammerelements (2, 3) ein dem Klammermaul (8) abgewandter Längsrand (16) zum benachbarten zweiten Flügelteil (13) dieses Klammerelements (2, 3) hin abgewinkelt ist und dass ein dem Klammermaul (8) abgewandter Längsrand (17) am zweiten Flügelteil (13) dieses Klammerelements (2, 3) derart umgebogen ist, dass jeweils der umgebogene Längsrand (17) am zweiten Flügelteil (13) des einen Klammerelements (2, 3) den abgewinkelten Längsrand (16) am ersten Flügelteil (12) des anderen Klammerelements (3, 2) hintergreift.

2. Trägerklammer nach Anspruch 1, **dadurch gekennzeichnet, dass** die zweiten Flügelteile (13) der Klammerelemente (2, 3) mit ihrer Innenseite an der Außenseite des ersten Flügelteils (12) des jeweils anderen Klammerelements (3, 2) anliegen.

3. Trägerklammer nach Anspruch 1 oder 2, **dadurch gekennzeichnet, dass** am Mittelteil (11) eines jeden Klammerelements (2, 3) zumindest eine Durchstecköffnung (14) vorgesehen ist, und dass durch die einander paarweise zugeordneten Durchstecköffnungen (14) an dem einen und dem anderen Klammerelement(2, 3) ein Gewindeschaft oder ein Gewindestab (15) durchführbar ist, der zum Festlegen der Relativposition der Klammerelemente (2, 3) der Trägerklammer (1) bestimmt ist.

4. Trägerklammer nach einem der Ansprüche 1 bis 3, **dadurch gekennzeichnet, dass** an dem ersten oder dem zweiten Flügelteil (12, 13) eines jeden Klammerelements (2, 3) in einem dem Mittelteil (11) abgewandten Teilbereich dieses Flügelteils (12, 13) wenigstens ein Führungsvorsprung (24) vorsteht, welcher Führungsvorsprung (24) in eine Führungsausformung (25) am zweiten Flügelteil (13) des jeweils anderen Klammerelements (3, 2) verschieblich eingreift.

5. Trägerklammer nach einem der Ansprüche 1 bis 4, **dadurch gekennzeichnet, dass** der Schiebeweg der Führungsvorsprünge (24) in den Führungsausformungen (25) den maximalen Abstand der gegenüberliegenden Kontaktflächen (4, 5, 6, 7) begrenzt.

6. Trägerklammer nach einem der Ansprüche 1 bis 5, **dadurch gekennzeichnet, dass** die Klammerelemente (2, 3) der Trägerklammer (1) als formidentische Biegeformteile ausgestaltet sind und aus einem Materialzuschnitt hergestellt sind, der das Mittelteil (11) sowie die beidseits des Mittelteils (11) angeordneten Flügelteile (12, 13) aufweist.

7. Trägerklammer nach einem der Ansprüche 1 bis 6, **dadurch gekennzeichnet, dass** zum Festspannen des Klammermauls (8) der Trägerklammer (1) zumindest eine Gewindemutter (21, 22) auf dem wenigstens einen Gewindestab (15) oder Gewindeschaft vorgesehen ist, welche Gewindemutter (21, 22) den die Durchstecköffnung (14) umgrenzenden Randbereich am Mittelteil (11) des benachbarten Klammerelements (2, 3) beaufschlagt.

8. Trägerklammer nach einem der Ansprüche 1 bis 7, **dadurch gekennzeichnet, dass** an dem wenigstens einen Gewindestab (15) eine Rohrschelle, eine Montageschiene oder dergleichen Befestigungselement gehalten ist.

## Claims

1. Beam clamp (1) having two clamp elements (2, 3) of identical shape which bear, on mutually opposite sides, contact surfaces (4, 5; 6, 7) which delimit a clamp mouth (8), wherein the clamp elements (2, 3) each have a central part (11) and, on both sides of the central part (11), a first and a second wing part (12, 13) and which are U-shaped in form in such a way that the central part (11) forms the central web of the U shape, and the wing parts (12, 13) each form a free web of the U shape, wherein one of the contact surfaces (4, 5, 6, 7) is provided on a transverse edge, which faces away from the central part (11), of at least one wing part (12, 13) of each clamp element (2, 3), and wherein the clamp elements (2, 3) are guided displaceably on one another with their wing parts (12, 13) between a relative position of minimum spacing and a relative position of maximum spacing separating the contact surfaces (4, 5; 6, 7) arranged on mutually opposite sides, **characterized in that**, on the first wing part (12) of each clamp element (2, 3), a longitudinal edge (16) facing away from the clamp mouth (8) is angled towards the adjacent second wing part (13) of this clamp element (2, 3), and **in that** a longitudinal edge (17), which faces away from the clamp mouth (8), on the second wing part (13) of this clamp element (2, 3) is bent over in such a way that in each case the bent-over longitudinal edge (17) on the second wing part (13) of the one clamp element (2, 3) engages behind the angled longitudinal edge (16) on the first wing part (12) of the other clamp element (3, 2).

2. Beam clamp according to Claim 1, **characterized in that** the second wing part (13) of the clamp elements (2, 3) bear by their inner side against the outer side of the first wing part (12) of the respective other clamp element (3, 2).

3. Beam clamp according to Claim 1 or 2, **characterized in that** at least one plug-through opening (14) is provided on the central part (11) of each clamp element (2, 3), and **in that** a threaded shaft or a threaded rod (15), which is intended for fixing the relative position of the clamp elements (2, 3) of the beam clamp (1), can be guided through the plug-through openings (14), which are assigned to one another in pairs, on the one and the other clamp element (2, 3).

4. Beam clamp according to one of Claims 1 to 3, **characterized in that** at least one guide projection (24) projects on the first or the second wing part (12, 13) of each clamp element (2, 3) in a subregion of this wing part (12, 13) that faces away from the central part (11), which guide projection (24) engages displaceably in a guide formation (25) on the second wing part (13) of the respective other clamp element (3, 2).

5. Beam clamp according to one of Claims 1 to 4, **characterized in that** the sliding path of the guide projection (24) in the guide formations (25) delimits the maximum spacing between the mutually opposite contact surfaces (4, 5, 6, 7).

6. Beam clamp according to one of Claims 1 to 5, **characterized in that** the clamp elements (2, 3) of the beam clamp (1) are configured as bent and shaped parts of identical shape and are produced from a material blank which has the central part (11) and the wing parts (12, 13) arranged on both sides of the central part (11).

7. Beam clamp according to one of Claims 1 to 6, **characterized in that**, in order to firmly clamp the clamp mouth (8) of the beam clamp (1), at least one threaded nut (21, 22) is provided on the at least one threaded rod (15) or threaded shaft, which threaded nut (21, 22) acts on the edge region, which delimits the plug-through opening (14), on the central part (11) of the adjacent clamp element (2, 3) .

8. Beam clamp according to one of Claims 1 to 7, **characterized in that** a pipe clip, a mounting rail or the like fastening element is held on the at least one threaded rod (15).

## Revendications

1. Pince de support (1) comprenant deux éléments de pince (2, 3) réalisés sous forme identique, qui portent sur des côtés opposés des faces de contact (4, 5 ; 6, 7) qui délimitent une ouverture de pince (8), dans laquelle les éléments de pince (2, 3) comportent respectivement une partie centrale (11) ainsi que de part et d'autre de la partie centrale (11) une première respectivement une seconde parties d'aile (12, 13) qui sont réalisées en forme de U, de telle manière que la partie centrale (11) forme l'âme centrale de la forme de U et que les parties d'aile (12, 13) forment respectivement une nervure libre de la forme de U, dans laquelle une des faces de contact (4, 5, 6, 7) est prévue sur un bord transversal d'au moins une partie d'aile (12, 13) de chaque élément de pince (2, 3) détourné de la partie centrale (11), et dans laquelle les éléments de pince (2, 3) pourvus de leurs parties d'aile (12, 13) peuvent être conduits par glissement l'un sur l'autre entre une position relative de très faible écartement et une position relative de très grand écartement des faces de contact (4, 5, 6, 7) disposées les unes en face des autres, **caractérisée en ce qu'**un bord longitudinal (16) détourné de l'ouverture de pince (8) est coudé sur la première partie d'aile (12) de chaque élément de pince (2, 3) en direction de la seconde partie d'aile voisine (13) de cet élément de pince (2, 3) et **en ce qu'**un bord longitudinal (17) détourné de l'ouverture de pince (8) est coudé sur la seconde partie de pince (13) de cet élément de pince (2, 3), de telle manière que chaque fois le bord longitudinal coudé (17) sur la deuxième partie d'aile (13) d'un élément de pince (2, 3) s'accroche derrière le bord longitudinal coudé (16) sur la première partie d'aile (12) de l'autre élément de pince (3, 2).

2. Pince de support selon la revendication 1, **caractérisée en ce que** les secondes parties d'aile (13) des éléments de pince (2, 3) s'appliquent avec leur côté intérieur sur le côté extérieur de la première partie d'aile (12) de l'autre élément de pince respectif (3, 2).

3. Pince de support selon la revendication 1 ou 2, **caractérisée en ce qu'**il est prévu sur la partie centrale (11) de chaque élément de pince (2, 3) au moins une ouverture de traversée (14), et **en ce qu'**un axe fileté ou une tige filetée (15) peut être introduit(e) à travers les ouvertures de traversée (14) associées par paires les unes avec les autres sur l'un et sur l'autre éléments de pince (2, 3), et est destiné(e) à la fixation de la position relative des éléments de pince (2, 3) de la pince de support (1).

4. Pince de support selon l'une quelconque des revendications 1 à 3, **caractérisée en ce qu'**au moins une saillie de guidage (24) est saillante sur la première ou la seconde partie d'aile (12, 13) de chaque élément de pince (2, 3) dans une zone partielle de cette partie d'aile (12, 13) détournée de la partie centrale (11), ladite saillie de guidage (24) s'engageant de façon coulissante dans un orifice de guidage (25) sur la seconde partie d'aile (13) de l'autre élément de pince respectif (3, 2).

5. Pince de support selon l'une quelconque des revendications 1 à 4, **caractérisée en ce que** la course de glissement des saillies de guidage (24) dans les orifices de guidage (25) limite l'écartement maximal des faces de contact opposées l'une à l'autre (4, 5, 6, 7).

6. Pince de support selon l'une quelconque des revendications 1 à 5, **caractérisée en ce que** les éléments de pince (2, 3) de la pince de support (1) sont réalisés sous la forme de pièces pliées de forme identique et sont fabriqués à partir d'une pièce de matière découpée, qui présente la partie centrale (11) ainsi que les parties d'aile (12, 13) disposées de part et d'autre de la partie centrale (11).

7. Pince de support selon l'une quelconque des revendications 1 à 6, **caractérisée en ce qu'**il est prévu, pour le serrage de l'ouverture de pince (8) de la pince de support (1), au moins un écrou fileté (21, 22) sur ladite au moins une tige filetée (15) ou sur ledit au moins un axe fileté, ledit écrou fileté (21, 22) agissant sur la région de bord qui entoure l'ouverture de traversée (14) sur la partie centrale (11) de l'élément de pince voisin (2, 3).

8. Pince de support selon l'une quelconque des revendications 1 à 7, **caractérisée en ce qu'**un collier d'attache, un rail de montage ou un élément de fixation similaire est maintenu sur ladite au moins une tige filetée (15).
